# EUROPEAN PATENT SPECIFICATION

(11) **EP 3 075 436 B1**
(45) Date of publication and mention of the grant of the patent: **01.08.2018**
(21) Application number: 15162515.9
(22) Date of filing: 02.04.2015
(51) Int. Cl.: B01D 53/90, C07C 69/40, B01D 53/94, F01N 3/20

(54) **DIESEL EXHAUST FLUID SOLUTIONS AND METHODS OF USING THE SAME**
DIESEL-EXHAUST-FLUID-LÖSUNGEN UND VERFAHREN ZUR VERWENDUNG DAVON
SOLUTIONS DE FLUIDE D'ÉCHAPPEMENT DIESEL ET PROCÉDÉS D'UTILISATION ASSOCIÉS

(43) Date of publication of application: 05.10.2016
(73) Proprietor: Afton Chemical Limited, Bracknell, Berkshire RG12 2UW (GB)
(72) Inventor: Anderson, Steven John, Church Lawton, Cheshire ST7 3BG (GB); Pilbeam, Jonathan James, Woking, Surrey GU21 4RE (GB)
(74) Representative: Simpson, Tobias Rutger

(56) References cited:
- EP-A1- 2 815 803
- EP-A2- 0 107 199
- WO-A1-94/00508
- FR-A1- 2 915 768
- GB-A- 2 131 820
- US-A- 3 045 042
- US-A- 5 752 989
- US-A1- 2010 015 022
- US-A1- 2011 233 461

## Description

### FIELD OF THE INVENTION

The present invention relates generally to formulations of diesel exhaust fluid ("DEF") that include one or more functional additives and the use of such formulations for reducing deposits in the exhaust systems of engines that use DEF requiring Selective Catalytic Reduction ("SCR") catalysts.

### BACKGROUND OF THE INVENTION

Diesel engines are the preferred means of producing torque for use in a wide range of applications ranging from uses in transportation such as heavy-duty trucks and trains, off-road agricultural and mining equipment to the large scale production of on-site electrical power to name a few. Their virtually unmatched power to mass ratios and the relative safety of their fuel makes them almost the only choice for use in applications such as long-haul trucks, tractors, earth movers, combines, surface mining equipment, non-electric locomotives, high capacity emergency power generators and the like.

Diesel engines operate at high internal temperature. One consequence of their high operating temperatures is that at least some of the nitrogen present in the engine at the moment of combustion may combine with oxygen to form NOx including species such as NO and NO2. Another consequence of their high operating temperatures is that diesel exhaust at or near the point of exit from the engine is very hot.

A compound such as NOx is problematic because it readily combines with volatile organic compounds in the atmosphere to form smog. NOx is regarded as a pollutant and virtually every industrialized nation regulates the levels of NOx that can be legally discharged into the atmosphere. The regulations governing NOx emissions are expected to become even stricter. Fortunately, engine and equipment manufacturers have developed systems for reducing the levels of NOx produced by the combustion of diesel fuel and released into the environment. Still, with even tighter limits on the amounts of these compounds that can be released into the atmosphere there remains a need for improved materials and methods for reducing the levels of NOx while not compromising the efficiency or productivity of the engine.

One approach to reducing NOx emissions is to treat diesel exhaust with a formulation of urea and water for the catalytic reduction of the oxides of nitrogen in the exhaust. One specific formulation, referred to as diesel exhaust fluid (DEF), is especially useful in combination with Selective Catalytic Reduction (SCR) systems. One of the drawbacks of using DEF, however, is that the DEF produces white crystalline deposits inside of the exhaust system, most notably on any raised or sharp edge such as the mixer, a propeller or turbine shaped component made from material similar to the exhaust, that promotes turbulence in the exhaust pipe upstream of the catalyst brick that is used for reduction of NOx. The turbulence aids in atomization, evaporation and hydrolysis of the DEF into gaseous ammonia. These white crystalline deposits also form downstream of the mixer on the internal surfaces of the exhaust system as well as on the DEF injector tip and the catalyst brick itself. The conventional means for removing the deposits is either mechanically scraping them off of the metal surfaces or replacing the components once deposits form on them. Therefore, reducing or preventing the formation of these deposits is advantageous and cost effective. For instance, US 2010/015022 describes an aqueous solution for limiting the formation of deposits based on cyanuric acid in any spray device intended for the after-treatment of exhaust gases.

### SUMMARY OF THE INVENTION

In one aspect, the present invention provides an exhaust after-treatment composition comprising a compound capable of providing ammonia above about 150 °C, an adduct of an α-substituted succinic anhydride with a polyalkylene glycol, a polyalkylene glycol derivative, or a mixture thereof, and water, wherein the α-substituted succinic anhydride is a compound of formula (I) 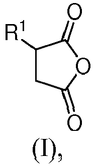 wherein R¹ is C₈-C₂₂alkyl, C₈-C₂₂alkenyl, or C₆-C₁₀arylalkyl

In another aspect, the present invention provides a process for reducing or preventing formation of deposits in an exhaust stream comprising vaporizing an exhaust after-treatment composition at about 150 °C or more to produce ammonia, wherein the exhaust after-treatment composition comprises a compound capable of providing ammonia above about 150 °C, an adduct of an α-substituted succinic anhydride with a polyalkylene glycol, a polyalkylene glycol derivative, or a mixture thereof, and water, wherein the α-substituted succinic anhydride is a compound of formula (I) 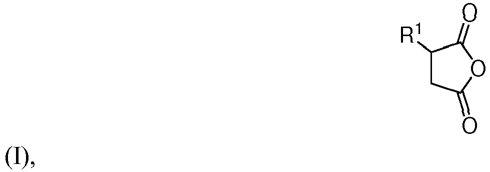 wherein R¹ is C₈-C₂₂alkyl, C₈-C₂₂alkenyl, and C₆-C₁₀arylalkyl.

In another aspect, the invention relates to the use of a composition as defined herein for inhibiting the formation of deposits in an exhaust stream.

### BRIEF DESCRIPTION OF THE DRAWINGS

Figure 1 is a schematic diagram of a representative SCR exhaust treatment system for a diesel engine.
Figure 2 is a graphical representation of deposit formation (in grams) in an exhaust treatment system over time (in hours) in the presence of DEF or a solution in accordance with one embodiment of the present invention.
Figure 3 is a schematic of a testing rig for simulating a diesel exhaust treatment system.

### DETAILED DESCRIPTION OF THE INVENTION

The present invention relates to aqueous solution-based compositions comprising a constituent capable of releasing gaseous ammonia above about 150 °C and an α-substituted succinic anhydride adduct. The compositions are useful for limiting the formation of deposits in any spray device intended for the after-treatment of exhaust gases, more particularly Selective Catalytic Reducer (SCR) devices. The aqueous solution contains a compound capable of decomposing to gaseous ammonia which vaporizes easily on injection and which significantly limits the deposits formed on the "cold" walls. Moreover, the use of this solution can be implemented in any spray device intended for the after-treatment of exhaust gases.

According to a first aspect of the invention, an exhaust after-treatment composition comprises: a) a compound capable of providing ammonia above about 150 °C; b) an adduct of an α-substituted succinic anhydride with a polyalkylene glycol, a polyalkylene glycol derivative, or a mixture thereof; and c) water.

The α-substituted succinic anhydride is a compound of formula (I) 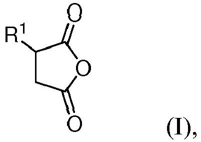 wherein R¹ is C₈-C₂₂alkyl, C₈-C₂₂alkenyl, or C₆-C₁₀arylalkyl.

In certain embodiments, the adduct of an α-substituted succinic anhydride, as described herein, is with a polyalkylene glycol. In other embodiments, the adduct is with a polyalkylene glycol derivative. In still other embodiments, the adduct is with a mixture of a polyalkylene glycol and a polyalkylene glycol derivative. Embodiments where the adduct is with a mixture of a polyalkylene glycol and a polyalkylene glycol derivative include mixtures of one or more polyalkylene glycol, as described herein, with one or more polyalkylene glycol derivative, as described herein. The use of mixtures of polyalkylene glycols and/or polyalkylene glycol derivatives produces mixtures of adducts with the α-substituted succinic anhydride.

In certain embodiments, the polyalkylene glycol may be a polyethylene glycol, a polypropylene glycol, a polybutylene glycol, a co-polymer between two or more of a polyethylene glycol, a polypropylene glycol, and a polybutylene glycol, or mixtures thereof. For example, in certain embodiments, the polyalkylene glycol may be a co-polymer between a polyethylene glycol and a polypropylene glycol such as a poloxamer (e.g., Pluronic), i.e., a polyoxypropylene flanked by two polyoxyethylene groups. In other embodiments, the polyalkylene glycol may be a co-polymer between a polyethylene glycol and a polybutylene glycol or between a polypropylene glycol and a polybutylene glycol. In still other embodiments, the polyalkylene glycol may be a mixture of different polyalkylene glycols, such as, for example, a mixture of a polyethylene glycol with a polypropylene glycol or a mixture of a polyethylene glycol with a co-polymer as described above. In further embodiments, the polyalkylene glycol may be a mixture of different polyethylene, polypropylene, or polybutylene glycols, e.g., a mixture of PEG 200 and PEG 400. In other embodiments, the polyalkylene glycol is a single polyalkylene glycol.

In certain embodiments, the polyalkylene glycol derivative may be a polyethylene glycol derivative, a polypropylene glycol derivative, a polybutylene glycol derivative, a derivative of a co-polymer between two or more of a polyethylene glycol, a polypropylene glycol, and a polybutylene glycol, and mixtures thereof. For example, in certain embodiments, the polyalkylene glycol derivative may be a derivative of a co-polymer between a polyethylene glycol and a polypropylene glycol. In still other embodiments, the polyalkylene glycol derivative may be a mixture of different polyalkylene glycol derivatives, such as, for example, a mixture of a polyethylene glycol derivative with a polypropylene glycol derivative or a mixture of a polyethylene glycol derivative with a derivative of a co-polymer as described above. In further embodiments, the polyalkylene glycol derivative may be a mixture of derivatives of different polyethylene, polypropylene, or polybutylene glycols, e.g., a mixture of a PEG 200 derivative and a PEG 400 derivative. In some embodiments, the polyalkylene glycol derivative is a single polyalkylene glycol derivative. A polyalkylene glycol derivative means a polyalkylene glycol having one of the two alcohol moieties of the glycol capped with a substituent group. The substituent group of the polyalkylene glycol derivative includes C₁-C₆alkyl (e.g., methyl, butyl), allyl, benzyl, substituted benzyl, cycloalkyl, such as cyclohexyl, and fatty acid alkoxylate esters, such as oleic acid ethoxylate. In a preferred embodiment, the polyalkylene glycol derivative is a methoxy derivative, i.e., one of the two alcohol moieties of the glycol is capped with a methyl group.

In further embodiments, a polyethylene glycol may have an average molecular weight from 200 (PEG 200) up to 4000 (PEG 4000). For example the polyethylene glycol includes, but is not limited to, PEG 200, PEG 300, PEG 400, PEG 600, PEG 1000, and PEG 4000. In certain preferred embodiments, the polyethylene glycol is PEG 1000.

In certain embodiments, the molecular weights for polypropylene glycols, polybutylene glycols, and co-polymers are from about 100 to about 10,000. In other embodiments, the molecular weights are from about 200 to about 4,000. In further embodiments, the molecular weights are from about 200 to about 1500.

In certain embodiments, the adduct may be a compound of formula (II) 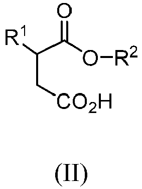 wherein R¹ is C₈-C₂₂alkyl, C₈-C₂₂alkenyl, or C₆-C₁₀arylalkyl; and R² is a polyoxyalkylene alcohol or a polyoxyalkylene alcohol derivative.

In yet other embodiments, the adduct may be a compound of formula (III) 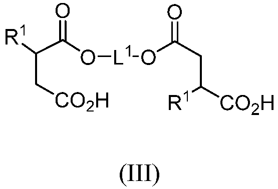 wherein R¹, at each occurrence, is independently C₈-C₂₂alkyl, C₈-C₂₂alkenyl, or C₆-C₁₀arylalkyl; and L¹ is a polyoxyalkylenyl.

The skilled artisan readily recognizes that the reactions for forming adducts of formula (II) and formula (III) are random reactions. Therefore, the compounds of formula (II) and formula (III) can be a mixture of positional isomers. For example, a compound of formula (II) can comprise the following two adducts: 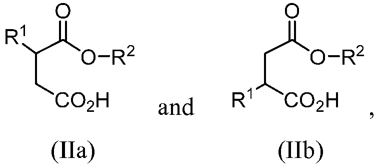 whereas the compound of formula (III) can comprise the following three adducts: 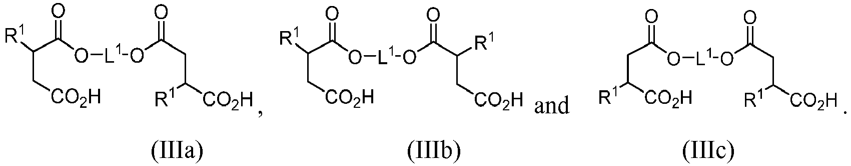 As used herein, the reference to a compound of formula (II) means one or more of a compound of formula (IIa), (IIb), or a mixture thereof, whereas a reference to a compound of formula (III) means one or more of a compound of formula (IIIa), (IIIb), (IIIc), or a mixture thereof.

In still more embodiments, the adduct may be a compound of formula (IV) 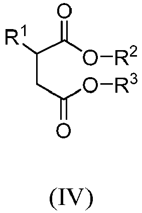 wherein R¹ is C₈-C₂₂alkyl, C₈-C₂₂alkenyl, or C₆-C₁₀arylalkyl; and R² and R³ are each independently a polyoxyalkylene alcohol or a polyoxyalkylene alcohol derivative.

As used herein, the term "C₈-C₂₂alkyl" means a straight or branched chain saturated hydrocarbon having from 8 to 22 carbon atoms (e.g., octyl, decyl, 4,6,8-trimethylnonan-2-yl, hexadecyl, octadecyl, dodecyl). In certain embodiments, alkyl groups of the C₈-C₂₂alkyl are straight chain saturated hydrocarbons. In other embodiments, alkyl groups of the C₈-C₂₂alkyl are branched chain saturated hydrocarbons.

As used herein, the term "C₈-C₂₂alkenyl" means a straight or branched chain unsaturated hydrocarbon containing at least one carbon-carbon double bond and having from 8 to 22 carbon atoms (e.g., dec-2-en-1-yl, 4,6,8-trimethylnon-2-en-2-yl, hexadec-2-en-1-yl, octadec-2-en-1-yl) and includes hydrocarbons like tetrapropenyl. A carbon-carbon double bond of the C₈-C₂₂alkenyl may have either E or Z geometry. In certain embodiments, R¹ is (E)-octadec-2-en-1-yl, (E)-hexadec-2-en-1-yl, or (E)-(4,6,8-trimethylnon-2-en-2-yl). In certain embodiments R¹ is 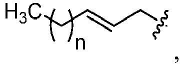 where n is 12-14. In some embodiments, alkenyl groups of the C₈-C₂₂alkenyl are straight chain unsaturated hydrocarbons. In other embodiments, alkenyl groups of the C₈-C₂₂alkenyl are branched chain unsaturated hydrocarbons.

As used herein, the term "C₆-C₁₀arylalkyl" means an aryl group appended to the parent molecular moiety through an alkylene chain of 1 to 18 carbons, wherein the alkylene chain may be either straight or branched. An "alkylene," as used herein, means a divalent group derived from a straight or branched chain hydrocarbon. Representative examples of alkylene include, but are not limited to, -CH₂-, -CH₂CH₂-, -CH₂CH₂CH₂-, -CH₂CH(CH₃)CH₂-, and -CH₂CH(CH₃)CH(CH₃)CH₂-. The C₆-C₁₀aryl is a phenyl or a bicyclic ring system containing an aromatic ring wherein all of the ring members of the bicyclic ring system are carbons. The bicyclic carbocyclic aryl is naphthyl, dihydronaphthalenyl, tetrahydronaphthalenyl, indanyl, or indenyl. The phenyl and bicyclic carbocyclic aryls are attached to the parent molecular moiety through any carbon atom contained within the phenyl or bicyclic carbocyclic aryl.

As used herein, the phrase "polyoxyalkylene alcohol", for example at R² and R^{3,} means the polyether portion of a polyalkylene glycol, as defined herein, that is attached to the parent molecular moiety at the first carbon atom of the polyether chain and terminating in an alcohol moiety. The polyoxyalkylene alcohol may be derived from a co-polymer of more than one polyalkylene glycol. Representative polyoxyalkylene alcohols have a formula including, but not limited to, -C₂H₄(OC₂H₄)ₓOH, -C₃H₆(OC₃H₆)_{y}OH, and -C₂H₄(OC₂H₄)ₐ(OC₃H₆)_{b}(OC₂H₄)ₐOH, wherein a, b, x, and y indicate repeating units. In one embodiment, x is an integer from 3 to 230, preferably from 3 to 100, and more preferably from 3-35. In other embodiments, y is an integer from 3 to 175; independently a is an integer from 1 to 50; and independently b is an integer from 1 to 50. In certain embodiments, the polyoxyalkylene alcohol at R² or R³ is -CH₂CH₂(OCH₂CH₂)₂₀₋₂₂OH.

As used herein, the phrase "polyoxyalkylene alcohol derivative", for example at R² and R³, means a polyoxyalkylene alcohol, as defined herein, where the terminal alcohol is capped with a substituent group. The substituent group of the polyoxyalkylene alcohol derivative includes C₁-C₆alkyl (e.g., methyl, butyl), allyl, benzyl, substituted benzyl, cycloalkyl, such as cyclohexyl, and fatty acid alkoxylate esters, such as oleic acid ethoxylate. In certain embodiments, R² and R³ is a derivative of CH₂CH₂(OCH₂CH₂)₂₀₋₂₂OH. In preferred embodiments, the polyoxyalkylene alcohol derivative is a methoxy derivative, e.g., CH₂CH₂(OCH₂CH₂)₂₀₋₂₂OCH₃.

As used herein, the term "polyoxyalkylenyl", for example at L¹, means the polyether portion of a polyalkylene glycol, as defined herein, that links two molecular moieties at a carbon atom at either end of the polyether chain. The polyoxyalkylenyl may be derived from a co-polymer of more than one polyalkylene glycol. Representative polyoxyalkylenyls have a formula including, but not limited to, -C₂H₄(OC₂H₄)ₓ-, -C₃H₆(OC₃H₆)_{y}-, and -C₂H₄(OC₂H₄)ₐ(OC₃H₆)_{b}(OC₂H₄)ₐ-, wherein a, b, x, and y indicate repeating units.

Compounds of formulas (I), (II), (III), and (IV) may have either the "R" or "S" stereochemistry depending on the arrangement of substituents around the chiral carbon atom. The terms "R" and "S" used herein are configurations as defined in IUPAC 1974 Recommendations for Section E, Fundamental Stereochemistry, Pure Appl. Chem., 1976, 45: 13-30.

The α-substituted succinic anhydride adducts of the invention include any combination of independently selected R¹, R², R³, L¹, polyalkylene glycol, polyalkylene glycol derivative, polyoxyalkylene alcohol, polyoxyalkylene alcohol derivative, and polyoxyalkylenyl, as these terms are defined herein.

In preferred embodiments, the composition comprises an adduct of an α-substituted succinic anhydride of formula (I) with a polyethylene glycol and R¹ is a C₁₆-C₁₈alkenyl. In one embodiment, the adduct is with a PEG 200 to a PEG 4000. In another embodiment, the adduct is with a PEG 1000.

In other embodiments, the adduct comprises a compound of formula (II), where R¹ is a C₁₆-C₁₈alkenyl and R² is a polyoxyethylene alcohol. In one embodiment, R¹ is 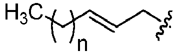 and n is 12-14. In another embodiment R² is - CH₂CH₂(OCH₂CH₂)₂₀₋₂₂OH, or a derivative thereof. In a further embodiment, R¹ is 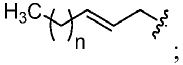 n is 12-14; and R² is -CH₂CH₂(OCH₂CH₂)₂₀₋₂₂OH, or a derivative thereof. In a further embodiment, the derivative is a methoxy derivative.

In still other embodiments, the adduct comprises a compound of formula (III), where R¹ is a C₁₆-C₁₈alkenyl and L¹ is a polyoxyethylenyl (i.e., -C₂H₄(OC₂H₄)ₓ-). In one embodiment, R¹ is 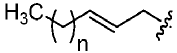 and n is 12-14. In another embodiment L¹ is -CH₂CH₂(OCH₂CH₂)₂₀₋₂₂-. In a further embodiment, R¹ is 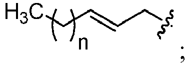 n is 12-14; and L¹ is -CH₂CH₂(OCH₂CH₂)₂₀₋₂₂-.

In still further embodiments, the adduct comprises a mixture of two or more of formulas (II), (III), and (IV), wherein R¹, R², R³, L¹ are as defined herein.

According to certain embodiments of the invention, the exhaust after-treatment composition is an aqueous solution comprising 15 to 40% v/v of at least one constituent which decomposes to gaseous ammonia. In a particular embodiment, the constituent is 32.5% v/v of the solution. In another embodiment, the aqueous solution comprises more than about 10 ppm, preferably more than about 100 ppm, of the α-substituted succinic anhydride adduct (e.g., formula (II), (III), and/or (IV)). In order to obtain satisfactory efficiency, for example a reduction of more than at least 50% in the deposits, the solution can comprise about 100 to about 5000 ppm, and advantageously about 175 to about 1000 ppm, or about 200 to about 500 ppm of the α-substituted succinic anhydride adduct. In one embodiment of the present invention, the constituent is selected from urea and its derivatives.

The present invention provides an exhaust after-treatment composition comprising a compound capable of providing gaseous ammonia above about 150 °C. In some embodiments, the compound is a compound capable of providing gaseous ammonia above about 175 °C. In another embodiment, the compound is a compound capable of providing gaseous ammonia above about 200 °C.

The aqueous solution can contain one or more additives in addition to the α-substituted succinic anhydride adduct (e.g., formula (II), (III), and/or (IV)) such as, for example, anti-foaming agents (alcohols, alkenes combined with one or more non-ionic surfactants, etc.), co-solvents intended to promote the dissolution of the adduct in the aqueous solution. The aqueous solution is prepared in the usual manner by mixing its constituents, preferably at ambient temperature, typically within a temperature range generally from 10 to 60 °C.

In one embodiment, the water in the aqueous composition is demineralized water. As used herein the term "demineralized water" refers to water that includes very low levels of minerals in general, and in particular very low levels of sulphur, alkaline metals, earth metals, vanadium, arsenic, ash, or any other compounds that are known to damage SCR catalysts. Demineralized water for use in the inventive formulations can be made by any method known in the art for reducing the level of contaminants in demineralized water including distillation and reverse osmosis.

In certain embodiments, the aqueous solutions comply with standard ISO 2241-1. One embodiment of the invention is the use of the aqueous solution in any spray device intended for the after-treatment of exhaust gases and, more particularly, SCR devices. Another embodiment includes adding the adduct as a readily soluble concentrate to a tank that already includes standard DEF. In some embodiments, these methods include the step of supplying pre-packaged quantities of a concentrate of the adduct which can be added to a reductant tank that includes urea. In some embodiments, these methods include the step of determining the composition of the reductant to insure that the relative levels of water, urea and the adduct in the reductant system are suitable for use in SCR.

One aspect of the present invention provides a process for reducing or preventing formation of deposits in an exhaust stream comprising vaporizing an exhaust after-treatment composition at about 150 °C or more to produce ammonia, wherein the exhaust after treatment composition comprises a compound capable of providing ammonia above about 150 °C, an adduct of an α-substituted succinic anhydride with a polyalkylene glycol, a polyethylene glycol derivative, or a mixture thereof, as defined hereinabove, and water. In certain embodiments, α-substituted succinic anhydride is a compound of formula (I), as defined above. In certain embodiments, the process employs an adduct comprising a compound of formula (II), (III), and/or (IV) as these formulas and their substituents are defined hereinabove.

In particular embodiments, the exhaust stream is treated with a SCR based exhaust treatment system. In a typical SCR based exhaust treatment system, a SCR catalyst is positioned in the exhaust stream of a diesel engine. The catalyst is positioned such that the temperature of the exhaust fumes contacting the surface of the catalyst is high enough to sustain the reaction of the NOx in the exhaust fumes with the reductant but not so high that the heat produced by the engine and the chemical reactions that take place in the exhaust stream damages the catalyst.

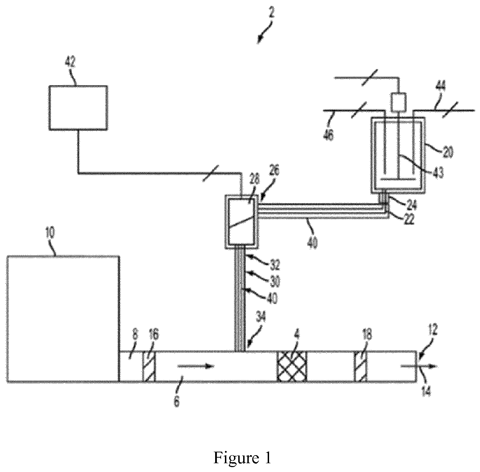

Referring now to FIG. 1, a schematic diagram of a typical heavy duty diesel exhaust treatment system (2). An SCR catalyst (4) is positioned within an exhaust pipe (6). The exhaust pipe has two ends. One end (8) is connected to a source of NOx (10) and the other end (12) is vented to the atmosphere (14). A typical system may also include an option additional pair of catalysts, (16) and (18), these are positioned before (16) and after (18) the SCR catalyst (4). The oxidation catalysts catalyse the oxidation of various compounds in the exhaust stream including organic molecules and un-reacted ammonia.

Because the SCR system requires a reductant such as ammonia or urea, the SCR system can include a system for storing, and delivering the reductant to the catalyst. Still referring to FIG. 1, for example, reductant storage vessel (20) is connected to a first delivery tube (22). First delivery tube (22) has two ends; the first end the inlet (24) of tube (22) is connected to storage vessel (20) while the second end the outlet (26) of tube (22) is connected to a reductant delivery valve (28) that regulates the flow of the reductant from tube (22) to a second delivery tube (30). Tube (30) also has two ends the first end inlet (32) is connected to the outlet of valve (28) while the second end outlet (34) of second delivery tube (32) is connected to the exhaust pipe (6). The outlet (34) of second delivery tube (30) is connected to exhaust pipe (6) such that the reductant in second delivery tube (30) is delivered onto or near the surface of SCR catalyst (4) by outlet (34).

In some embodiments, the SCR system (2) may include a device for maintaining the temperature of the reductant in storage vessel (20). In some configurations, the first reductant delivery tube (22), the reductant delivery value (28) and/or the second reductant delivery tube (30) may also be equipped with a device (40) to help regulate the temperature of the reductant in the system. In some embodiments of the invention, the device for regulating the temperature of the reductant (40) may be selected from the group consisting of: insulation, a heating coil or sock; and/or a cooling or warming jacket or some combination thereof.

In some embodiments, the system (2) may further include an optional mixing device (43) supplied to either periodically or continuously agitate the contents of reductant storage vessel (20). Vessel (20) may also be equipped with a temperature sensor (44) to measure the temperature of the contents of vessel (20). Vessel (20) may also be equipped with a probe (46) for measuring the nitrogen content of the material stored in vessel (20). In some embodiments, the system may be supplied with a controller (42) which may include inputs from sensors connected to the exhaust and/or SCR systems. The controller may also be equipped with a Central Processing Unit or dedicated logic circuits that regulate the dispersion of reductant to the system as necessary to maintain the release of NOx within acceptable limits. The controller may also be used to monitor the temperature or the reductant delivery system and perhaps to control portions of the system dedicated to maintain the reductant within an acceptable temperature range. In some embodiments, the same controller is used to regulate the rate and/or frequency of the agitator associated with reductant storage tank one. In some embodiments, the controller may be used to monitor the level of reductant and/or the composition of the reductant in reductant storage vessel (20). Some exhaust systems include an oxidation catalyst (18), generally located downstream of the SCR catalyst. Some oxidative catalysts can oxidize ammonia and formaldehyde, thereby preventing the release of these compounds into the atmosphere.

Sensors that can be used to monitor the level of compounds that include ammonia and urea in DEF formulation include, but are not limited, to those disclosed in US Patent Number 7,722,813 issued on May 25, 2010. Some of these sensors operate by measuring the ability of a formulation of DEF to transfer heat and correlating this property with the concentration of urea in the system. In some versions the sensor in the form of a probe is inserted into the DEF formulation. In some embodiments, the system includes a circuit used to supply a current applied to a heating element positioned in a portion of the probe that is submerged in the DEF in order to produce heat and a temperature sensing device that is also submerged in the DEF. The amount of current that must be applied to the heating element in order to produce a discernable effect on the temperature sensor is influenced by the composition of the liquid surrounding the probe tip. The relationship between the levels of current that must be applied to affect a temperature change measured at the probe's temperature sensor can be determined as a function of urea content in the DEF. Once the relationship between current and urea content is known for a given probe and a formulation with certain components the relationship can then be used to infer the level of urea in a sample of DEF by measuring the amount of current required to effect a change in temperature. Any method that can be used to determine or at least estimate the composition of DEF in a storage tank or anywhere in a SCR system can be used to practice the invention.

Spec grade DEF is widely available for use in SCR based NOx reduction systems. Spec grade DEF includes on the order of about 32.5 wt. % urea and purified water. These formulations are optimized to prolong catalyst life and include extremely low levels of impurities that can cause deposits or poison expensive SCR catalysts. Accordingly, SCR spec grade DEF and the formulations disclosed herein have virtually undetectable levels of sulphur, metals, non-combustible fillers, other inert contaminants, compounds whose effects on SCR catalyst life are unknown.

This technology is well known and has widespread use in Europe, and its use has been growing in North America. Still some challenges persist in the use of this technology including the tendency for urea deposits to form in the exhaust system especially between the DEF dosing inlet and upstream of selective catalytic reduction (SCR) catalyst and the relatively high freezing point of 32.5 wt. % urea in water solutions. This latter problem has been addressed by certain formulation nitrogen-based reductants which have lower freezing points than aqueous urea and still function. Some of these formulations are disclosed in US Patent Application No. 13/193,715, filed on July 29, 2011 and published as US 2013/0028817.

The problem of urea deposition in the DEF feeding system can cause reduced fuel efficiency, particulate filter failure, damage to the SCR catalyst bed, and even engine failure as a significant build-up of urea in the exhaust system may cause excessive back pressure. Some exhaust systems are equipped with pressure sensors, in part to detect the effects of urea deposition. These sensors are part of a monitoring system that enables the diesel operator to detect problematic urea build-up and to take appropriate action such as shutting down the system until the deposits can be physically removed from the system. Still other systematic approaches to addressing the problem of urea build-up is to alter the position of the DEF feed tube and/or time the release of DEF into a portion of the exhaust system immediately up-stream of the SCR catalytic bed in order to minimize the time that urea rich DEF is in contact with the DEF feed system and pre-SCR section of the exhaust system.

The deposits formed in an exhaust stream can, in certain embodiments, be any deposits that result from the decomposition of urea and include deposits containing one or more of biuret, cyanuric acid, ammelide, ammeline and melamine. In one embodiment, the deposits in the exhaust stream comprise cyanuric acid-based deposits.

### Synthetic Methods

The adducts of an α-substituted succinic anhydride with a polyalkylene glycol can be prepared by methods known to those skilled in the art. For example, approximately a 1:1, 2:1, or 1:2 molar equivalent of alkyl substituted succinic anhydride to polyalkylene glycol can be used to prepare compounds of formula (II), (III) and (IV), respectively. The polyalkylene glycol can be heated in a stirred vessel to approximately 60 to 100°C and then charged with pre-heated (to melt) substituted succinic anhydride for 2-24 hours, and more typically 4-8 hours. The reaction can be monitored by FT-IR and chromatography techniques such as GC, GPC and HPLC.

### Examples

**Example 1.** Preparation of additive compound. An adduct of an α-substituted succinic anhydride with a polyalkylene glycol was prepared as follows: A 1:1 +/-0.2 molar equivalent of a C16-C18 alkenyl α-substituted succinic anhydride to polyethylene glycol was used to prepare certain compounds of formula (II). The polyethylene glycol was heated in a stirred vessel to approximately 60 to 100°C and then charged with pre-heated (to melt) C16-C18 α-substituted succinic anhydride for approximately 4-8 hours. The reaction was monitored by FT-IR and GPC.

**Example 2.** Aqueous test solutions are prepared by heating the additive compound prepared in Example 1 to 50°C for at least one hour until the preparation is visually homogeneous. The heated preparation is added to commercially obtained diesel exhaust fluid (DEF) (ISO 22241 32.5% high-purity urea and 67.5% deionized water) to produce a 10% additive/90% DEF solution w/w and the resulting 10% additive solution is shaken on a mechanical shaker for approximately one hour. The 10% additive solution is then added to commercially obtained diesel exhaust fluid (DEF) (ISO 22241 32.5% high-purity urea and 67.5% deionized water) at the desired treat rate to prepare an aqueous test solution of the desired additive concentration in parts per million volume (ppmv). The aqueous test solutions with the additive of Example 1, at 250 ppmv, are tested as compared to DEF without the additive to determine if the additive compounds had a measurable effect on the tendency of deposit formation in a diesel exhaust treatment system.

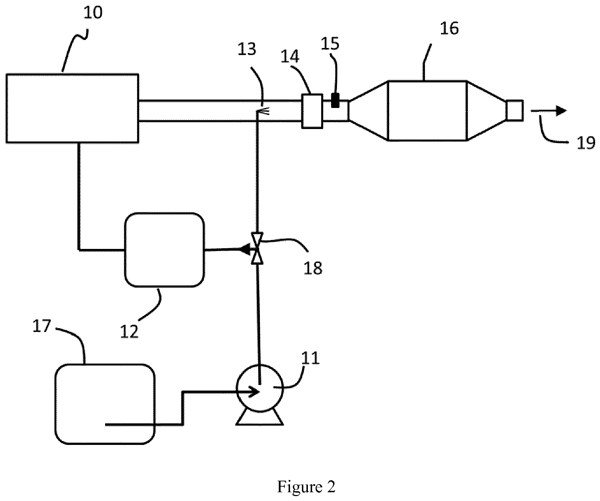

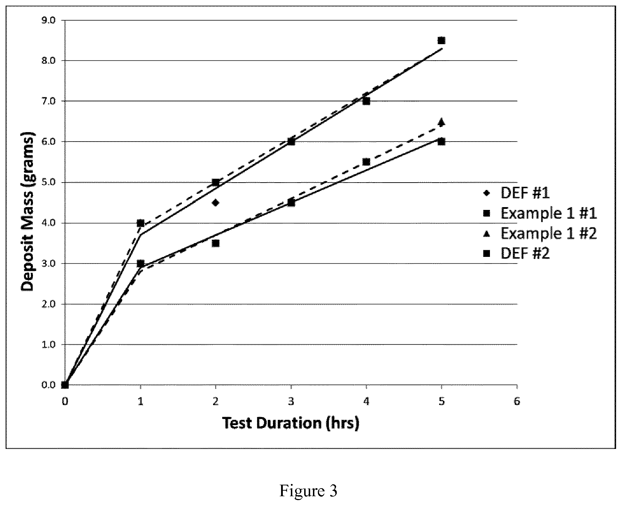

Figure 2 provides a schematic of a testing rig that can be used to simulate a diesel exhaust treatment system. Referring to Figure 2, the mixer **14** is removed and weighed to record a clean weight prior to testing. The mixer is then installed back into the system prior to the start of the study. Prior to injecting DEF or DEF plus Example 1 additive composition, hot air blower **10** is used to bring the temperature of the system to the desired test temperature. Controller **12,** temperature and pressure sensor **15,** pump **11,** DEF tank **17,** control valve **18,** SCR **16,** mixer **14** and doser **13,** are programmed to maintain steady state conditions to simulate exhaust gas **19** in the test rig during the entire testing period using the parameters indicated in Table 1 for each test. The test is run for a total of five hours. To measure deposit buildup over time, the test is briefly halted at one hour intervals to remove the mixer and measure the weight of the mixer at each interval. The amount of deposit buildup in the mixer is calculated based on the initial weight of the mixer, the weight of the mixer at each interval, and the weight of the mixer at the end of the test. The testing parameters, the average amount of deposits formed (grams), and the number of samples tested are shown in Table 1. The individual test results at 205°C are further detailed in Table 2 and graphically represented in Figure 3. Only two of the six samples of DEF alone are reproduced in Table 2 and graphically represented in Figure 3. The remaining four samples of DEF alone showed similar results and are, therefore, not shown in Table 2 or Figure 3.

**Table 1.**

| Test Number | Test 1 | Test 2 |
|---|---|---|
| Exhaust Gas Temperature | 205°C | 260°C |
| Exhaust gas flow | 40kg/hr | 52g/h |
| Solution injection rate | 40kg/hr | 52g/h |
| DEF Only | 8.33g (n=6) | 2.5g (n=1) |
| DEF + Example 1 @ 250ppmv | 6.25g (n=2) | 1.5g (n=1) |
| Average Improvement @ 5 hrs (%) | 25.0% | 40.0% |

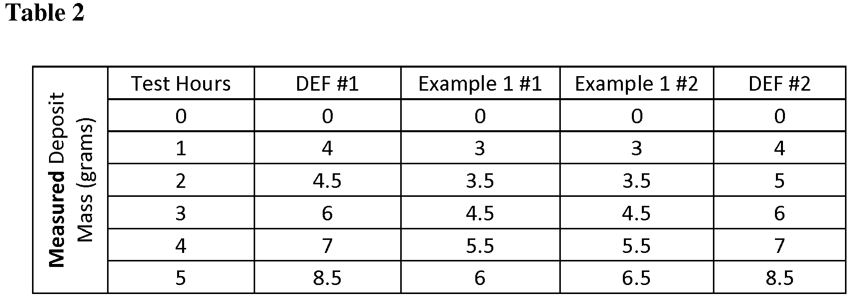

## Claims

1. An exhaust after-treatment composition comprising:
a) a compound capable of providing ammonia above about 150 °C;
b) an adduct of an α-substituted succinic anhydride with a polyalkylene glycol, a polyalkylene glycol derivative, or a mixture thereof; and
c) water;
wherein the α-substituted succinic anhydride is a compound of formula (I) 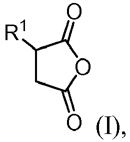 wherein R¹ is C₈-C₂₂alkyl, C₈-C₂₂alkenyl, or C₆-C₁₀arylalkyl.

2. The composition of claim 1, wherein the polyalkylene glycol is selected from a polyethylene glycol, a polypropylene glycol, a polybutylene glycol, a co-polymer between two or more of a polyethylene glycol, a polypropylene glycol, and a polybutylene glycol, and mixtures thereof; and the polyalkylene glycol derivative is selected from a polyethylene glycol derivative, a polypropylene glycol derivative, a polybutylene glycol derivative, a derivative of a co-polymer between two or more of a polyethylene glycol, a polypropylene glycol, and a polybutylene glycol, and mixtures thereof.

3. The composition of claim 2, wherein the polyalkylene glycol is a polyethylene glycol, preferably a polyethylene glycol 200 (PEG 200) to a polyethylene glycol 4000 (PEG 4000), more preferably a polyethylene glycol 1000 (PEG 1000).

4. The composition of any of claims 1-3, wherein R¹ is C₁₆-C₁₈alkenyl.

5. The composition of any of claims 1-4, wherein the compound capable of providing ammonia is urea.

6. The composition of any of claims 1-5, wherein the composition comprises 15 % to 40 % by weight of the compound capable of providing ammonia.

7. The composition of any of claims 1-6, wherein the composition comprises 100 ppm to 5000 ppm of the adduct.

8. The composition of any of claims 1-7, wherein the adduct comprises a compound of formula (II) 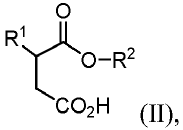 wherein
R¹ is C₈-C₂₂alkyl, C₈-C₂₂alkenyl, or C₆-C₁₀arylalkyl, and is preferably 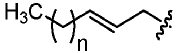 wherein n is 12-14; and
R² is a polyoxyalkylene alcohol or a polyoxyalkylene alcohol derivative, and is preferably -CH₂CH₂(OCH₂CH₂)₂₀₋₂₂OH, or a derivative thereof.

9. The composition of any of claims 1-7, wherein the adduct comprises a compound of formula (III) 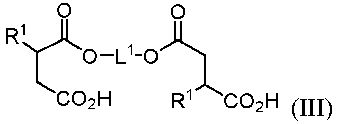 wherein
R¹, at each occurrence, is independently C₈-C₂₂alkyl, C₈-C₂₂alkenyl, or C₆-C₁₀arylalkyl, and is preferably 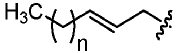 wherein n is 12-14; and L¹ is a polyoxyalkylenyl.

10. The composition of any of claims 1-7, wherein the adduct comprises a compound of formula (IV) 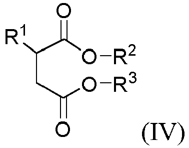 wherein
R¹ is C₈-C₂₂alkyl, C₈-C₂₂alkenyl, or C₆-C₁₀arylalkyl, and is preferably 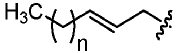 wherein n is 12-14; and
R² and R³ are each independently a polyoxyalkylene alcohol or a polyoxyalkylene alcohol derivative, and is preferably -CH₂CH₂(OCH₂CH₂)₂₀₋₂₂OH, or a derivative thereof.

11. The composition of any of claims 1-7, wherein the adduct comprises a mixture of two or more of formulas (II), (III), and (IV) 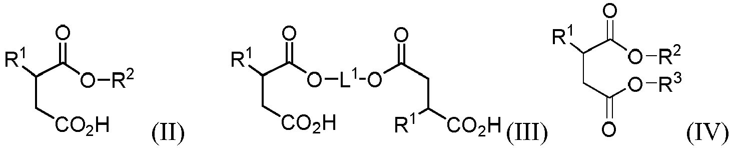 wherein
R¹, at each occurrence, is independently C₈-C₂₂alkyl, C₈-C₂₂alkenyl, or C₆-C₁₀arylalkyl, and is preferably 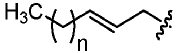 wherein n is 12-14;
R² and R³, at each occurrence, are each independently a polyoxyalkylene alcohol or a polyoxyalkylene alcohol derivative, and is preferably -CH₂CH₂(OCH₂CH₂)₂₀₋₂₂OH, or a derivative thereof; and
L¹ is a polyoxyalkylenyl.

12. The composition of any of claims 1-11, wherein the polyalkylene glycol derivative is a methoxy derivative.

13. A process for reducing or preventing formation of deposits in an exhaust stream comprising:
vaporizing an exhaust after-treatment composition according to any of claims 1-12 at about 150 °C or more to produce ammonia.

14. Use of an adduct as defined in any of claims 1-4 or 8-12, for inhibiting the formation of deposits in an exhaust stream, wherein the adduct is used as part of a composition according to any of claims 1-12.

15. The process of claim 13, or the use of claim 14, wherein the deposits comprise cyanuric acid-based deposits.

## Patentansprüche

1. Abgasnachbehandlungs-Zusammensetzung umfassend:
a) eine Verbindung, die zur Bereitstellung von Ammoniak über ca. 150 °C fähig ist;
b) ein Addukt von einem α-substituierten Bernsteinsäureanhydrid mit einem Polyalkylenglykol, einem Polyalkylenglykol-Derivat oder einem Gemisch davon; und
c) Wasser;
wobei das α-substituierte Bernsteinsäureanhydrid eine Verbindung der Formel (I) 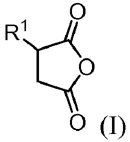 ist, wobei R¹ C₈- bis C₂₂-Alkyl, C₈- bis C₂₂-Alkenyl oder C₆- bis C₁₀-Arylalkyl ist.

2. Zusammensetzung nach Anspruch 1, wobei das Polyalkylenglykol ausgewählt ist aus einem Polyethylenglykol, einem Polypropylenglykol, einem Polybutylenglykol, einem Copolymer zwischen zwei oder mehr von einem Polyethylenglykol, einem Polypropylenglykol und einem Polybutylenglykol und Gemischen davon; und das Polyalkylenglykol-Derivat ausgewählt ist aus einem Polyethylenglykol-Derivat, einem Polypropylenglykol-Derivat, einem Polybutylenglykol-Derivat, einem Derivat von einem Copolymer zwischen zwei oder mehr von einem Polyethylenglykol, einem Polypropylenglykol und einem Polybutylenglykol und Gemischen davon.

3. Zusammensetzung nach Anspruch 2, wobei das Polyalkylenglykol ein Polyethylenglykol, bevorzugt ein Polyethylenglykol 200 (PEG 200) bis zu einem Polyethylenglykol 4000 (PEG 4000), bevorzugter ein Polyethylenglykol 1000 (PEG 1000) ist.

4. Zusammensetzung nach einem der Ansprüche 1 bis 3, wobei R¹ C₁₆- bis C₁₈-Alkenyl ist.

5. Zusammensetzung nach einem der Ansprüche 1 bis 4, wobei die zur Bereitstellung von Ammoniak fähige Verbindung Harnstoff ist.

6. Zusammensetzung nach einem der Ansprüche 1 bis 5, wobei die Zusammensetzung 15 Gew.-% bis 40 Gew.-% der zur Bereitstellung von Ammoniak fähigen Verbindung umfasst.

7. Zusammensetzung nach einem der Ansprüche 1 bis 6, wobei die Zusammensetzung 100 ppm bis 5000 ppm des Addukts umfasst.

8. Zusammensetzung nach einem der Ansprüche 1 bis 7, wobei das Addukt eine Verbindung der Formel (II) 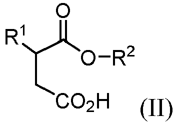 umfasst, wobei
R¹ C₈- bis C₂₂-Alkyl, C₈- bis C₂₂-Alkenyl oder C₆- bis C₁₀-Arylalkyl ist, und bevorzugt 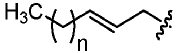 ist, wobei n 12 bis 14 ist; und
R² ein Polyoxyalkylenalkohol oder ein Polyoxyalkylenalkohol-Derivat ist, und bevorzugt -CH₂CH₂(OCH₂CH₂)₂₀₋₂₂OH oder ein Derivat davon ist.

9. Zusammensetzung nach einem der Ansprüche 1 bis 7, wobei das Addukt eine Verbindung der Formel (III) 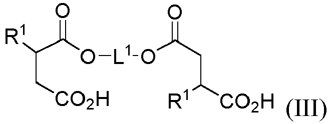 umfasst, wobei
R¹, bei jedem Vorkommen, unabhängig C₈- bis C₂₂-Akyl, C₈- bis C₂₂-Alkenyl oder C₆- bis
C₁₀-Arylalkyl ist, und bevorzugt 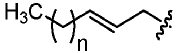 ist, wobei n 12 bis 14 ist; und
L¹ ein Polyoxyalkylenyl ist.

10. Zusammensetzung nach einem der Ansprüche 1 bis 7, wobei das Addukt eine Verbindung der Formel (IV) 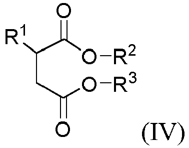 umfasst, wobei
R¹ C₈- bis C₂₂-Alkyl, C₈- bis C₂₂-Alkenyl oder C₆- bis C₁₀-Arylalkyl ist, und bevorzugt 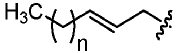 ist, wobei n 12 bis 14 ist; und
R² und R³ jeweils unabhängig ein Polyoxyalkylenalkohol oder ein Polyoxyalkylenalkohol-Derivat sind, und bevorzugt -CH₂CH₂(OCH₂CH₂)₂₀₋₂₂OH oder ein Derivat davon sind.

11. Zusammensetzung nach einem der Ansprüche 1 bis 7, wobei das Addukt ein Gemisch von zwei oder mehr der Formeln (II), (III) und (IV) 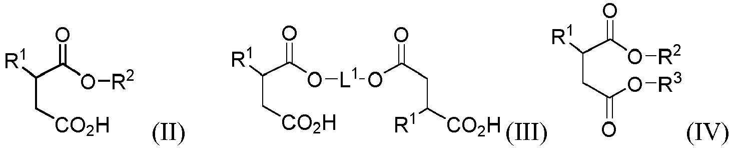 umfasst, wobei
R¹, bei jedem Vorkommen, unabhängig C₈- bis C₂₂-Alkyl, C₈- bis C₂₂-Alkenyl oder C₆- bis
C₁₀-Arylalkyl ist, und bevorzugt 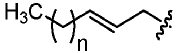 ist, wobei n 12 bis 14 ist;
R² und R³, bei jedem Vorkommen, jeweils unabhängig ein Polyoxyalkylenalkohol oder ein Polyoxyalkylenalkohol-Derivat sind, und bevorzugt -CH₂CH₂(OCH₂CH₂)₂₀₋₂₂OH oder ein Derivat davon sind; und
L¹ ein Polyoxyalkylenyl ist.

12. Zusammensetzung nach einem der Ansprüche 1 bis 11, wobei das Polyalkylenglykol-Derivat ein Methoxy-Derivat ist.

13. Verfahren zur Verminderung oder Verhinderung der Bildung von Ablagerungen in einem Abgasstrom, umfassend:
Verdampfen einer Abgasnachbehandlungs-Zusammensetzung nach einem der Ansprüche 1 bis 12 bei ca. 150 °C oder mehr zur Produktion von Ammoniak.

14. Verwendung eines Addukts wie nach einem der Ansprüche 1 bis 4 oder 8 bis 12 definiert zum Inhibieren der Bildung von Ablagerungen in einem Abgasstrom, wobei das Addukt als Teil einer Zusammensetzung nach einem der Ansprüche 1 bis 12 verwendet wird.

15. Verfahren nach Anspruch 13 oder Verwendung nach Anspruch 14, wobei die Ablagerungen auf Cyanursäure basierende Ablagerungen umfassen.

## Revendications

1. Composition de post-traitement des gaz d'échappement comprenant :
a) un composé capable de fournir de l'ammoniaque au-dessus d'environ 150 °C ;
b) un adduit d'un anhydride succinique substitué en α avec un polyalkylène glycol, un dérivé de polyalkylène glycol, ou un mélange de ceux-ci ; et
c) de l'eau ;
dans laquelle l'anhydride succinique substitué en α est un composé de formule (I) 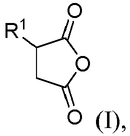 dans laquelle R¹ est un alkyle en C₈ à C₂₂, un alcényle en C₈ à C₂₂, ou un arylalkyle en C₆ à C₁₀.

2. Composition selon la revendication 1, dans laquelle le polyalkylène glycol est sélectionné parmi un polyéthylène glycol, un polypropylène glycol, un polybutylène glycol, un copolymère entre deux éléments ou plus parmi un polyéthylène glycol, un polypropylène glycol, et un polybutylène glycol, et des mélanges de ceux-ci ; et le dérivé de polyalkylène glycol est sélectionné parmi un dérivé de polyéthylène glycol, un dérivé de polypropylène glycol, un dérivé de polybutylène glycol, un dérivé d'un copolymère entre deux éléments ou plus parmi un polyéthylène glycol, un polypropylène glycol, et un polybutylène glycol, et des mélanges de ceux-ci.

3. Composition selon la revendication 2, dans laquelle le polyalkylène glycol est un polyéthylène glycol, préférablement un polyéthylène glycol 200 (PEG 200) à un polyéthylène glycol 4 000 (PEG 4 000), plus préférablement un polyéthylène glycol 1 000 (PEG 1 000).

4. Composition selon l'une quelconque des revendications 1 à 3, dans laquelle R¹ est un alcényle en C₁₆ à C₁₈.

5. Composition selon l'une quelconque des revendications 1 à 4, dans laquelle le composé capable de fournir de l'ammoniaque est l'urée.

6. Composition selon l'une quelconque des revendications 1 à 5, dans laquelle la composition comprend 15 % à 40 % en poids du composé capable de fournir de l'ammoniaque.

7. Composition selon l'une quelconque des revendications 1 à 6, dans laquelle la composition comprend 100 ppm à 5 000 ppm de l'adduit.

8. Composition selon l'une quelconque des revendications 1 à 7, dans laquelle l'adduit comprend un composé de formule (II) 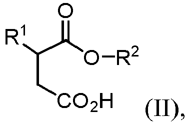 dans laquelle
R¹ est un alkyle en C₈ à C₂₂, un alcényle en C₈ à C₂₂, ou un arylalkyle en C₆ à C₁₀, et est
préférablement 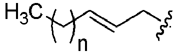 dans laquelle n est 12 à 14 ; et
R² est un alcool polyoxyalkylène ou un dérivé d'alcool polyoxyalkylène, et est préférablement -CH₂CH₂(OCH₂CH₂)₂₀₋₂₂OH, ou un dérivé de celui-ci.

9. Composition selon l'une quelconque des revendications 1 à 7, dans laquelle l'adduit comprend un composé de formule (III) 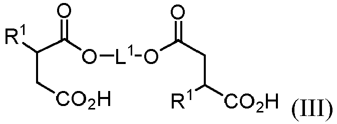 dans laquelle
R¹, à chaque apparition, est indépendamment un alkyle en C₈ à C₂₂, un alcényle en C₈ à
C₂₂, ou un arylalkyle en C₆ à C₁₀, et est préférablement 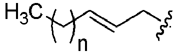 dans laquelle n est 12 à 14 ; et
L¹ est un polyoxyalkylényle.

10. Composition selon l'une quelconque des revendications 1 à 7, dans laquelle l'adduit comprend un composé de formule (IV) 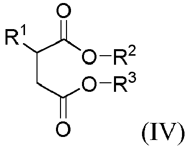 dans laquelle
R¹ est un alkyle en C₈ à C₂₂, un alcényle en C₈ à C₂₂, ou un arylalkyle en C₆ à C₁₀, et est
préférablement 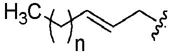 dans laquelle n est 12 à 14 ; et
R² et R³ sont chacun indépendamment un alcool polyoxyalkylène ou un dérivé d'alcool polyoxyalkylène, et est préférablement -CH₂CH₂(OCH₂CH₂)₂₀₋₂₂OH, ou un dérivé de ceux-ci.

11. Composition selon l'une quelconque des revendications 1 à 7, dans laquelle l'adduit comprend un mélange de deux formules ou plus parmi les formules (II), (III), et (IV) 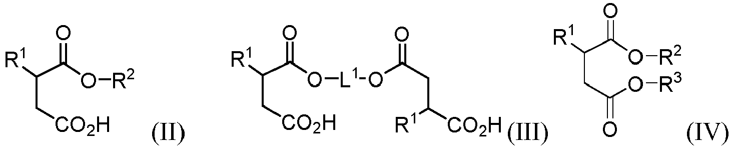 dans laquelle
R¹, à chaque apparition, est indépendamment un alkyle en C₈ à C₂₂, un alcényle en C₈ à
C₂₂, ou un arylalkyle en C₆ à C₁₀, et est préférablement 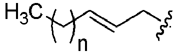 dans laquelle n est 12 à 14 ;
R² et R³, à chaque apparition, sont chacun indépendamment un alcool polyoxyalkylène ou un dérivé d'alcool polyoxyalkylène, et est préférablement -CH₂CH₂(OCH₂CH₂)₂₀₋₂₂OH, ou un dérivé de celui-ci ; et
L¹ est un polyoxyalkylényle.

12. Composition selon l'une quelconque des revendications 1 à 11, dans laquelle le dérivé de polyalkylène glycol est un dérivé méthoxy.

13. Procédé de réduction ou de prévention de la formation de dépôts dans un flux de gaz d'échappement comprenant :
la vaporisation d'une composition de post-traitement de gaz d'échappement selon l'une quelconque des revendications 1 à 12 à environ 150 °C ou plus pour produire de l'ammoniaque.

14. Utilisation d'un adduit comme est défini dans l'une quelconque des revendications 1 à 4 ou 8 à 12, pour l'inhibition de la formation de dépôts dans un flux de gaz d'échappement, dans laquelle l'adduit est utilisé comme une partie d'une composition selon l'une quelconque des revendications 1 à 12.

15. Procédé selon la revendication 13, ou utilisation selon la revendication 14, dans lequel les dépôts comprennent des dépôts à base d'acide cyanurique.
